(19) Europäisches Patentamt / European Patent Office / Office européen des brevets

(11) **EP 2 789 969 A1**

(12) **EUROPEAN PATENT APPLICATION**

(43) Date of publication:
**15.10.2014 Bulletin 2014/42**

(51) Int Cl.:
***G01B 9/02*** (2006.01)

(21) Application number: **14164284.3**

(22) Date of filing: **10.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.04.2013 JP 2013083184**

(71) Applicant: **CANON KABUSHIKI KAISHA Ohta-ku Tokyo 146-8501 (JP)**

(72) Inventor: **Hatada, Akihiro Ohta-ku Tokyo (JP)**

(74) Representative: **Houle, Timothy James Canon Europe Ltd European Patent Department 3 The Square Stockley Park Uxbridge, Middlesex UB11 1ET (GB)**

(54) **Multiwavelength heterodyne interferometer**

(57) Provided is a measuring apparatus (1) that includes a heterodyne interferometer (100); a first detector (25) configured to detect interference light between reference light and light to be detected, and output a measured signal (41); a second detector (24) configured to detect interference light between first light having a first wavelength and second light having a second wavelength different from the first wavelength, and output a reference signal (42); an oscillator (43; 43a-43c) configured to generate a standard signal having a frequency corresponding to a frequency shift amount; a first synchronization detector (44a, 44b) configured to perform synchronous detection of the measured signal (41) and the standard signal; a second synchronization detector (44c, 44d) configured to perform synchronous detection of the reference signal (42) and the standard signal; a first processing means (46; 46a, 46b) that determines a phase difference between the measured signal (41) and the reference signal (42) based on the outputs of the first synchronization detector (44a, 44b) and the second synchronization detector (44c, 44d); and a second processing means (47) that determines the position based on the phase difference.

FIG. 2A

**Description**

BACKGROUND OF THE INVENTION

Field of the Invention

The present invention relates to a measuring apparatus and an article manufacturing method.

Description of the Related Art

Conventionally, there has been known a measuring apparatus using a multi-wavelength heterodyne interferometer as an apparatus for measuring the position (absolute distance to a surface to be detected) of an object or the shape of an object with high accuracy. For example, although there is a wavelength-scanning type measuring apparatus or a measuring apparatus using a plurality of fixed wavelengths, a wavelength-scanning type measuring apparatus alone generally has low measurement accuracy. Accordingly, Japanese Patent Laid-Open No. 2011-99756 discloses a wavelength-scanning type measuring apparatus that combines a relative distance measurement by a fixed wavelength with the conventional measurement so as to improve measurement accuracy. However, such a measuring apparatus optically disperses light into components of different wavelengths so as to detect the phases of the respective wavelengths, and thus, a detector is required for each wavelength. Consequently, the configuration of the apparatus becomes complicated, resulting in an increase in cost. Furthermore, when an attempt is made to generate a synthetic wavelength having a long wavelength, a synthetic wavelength to be used is limited because it is difficult to optically disperse light having a required wavelength difference into components of different wavelengths. Thus, Japanese Patent Laid-Open No. H11-201727 discloses a multi-wavelength heterodyne apparatus that detects light beams by a single detector using a light source having a heterodyne frequency different for each wavelength and performs heterodyne detection at a specific frequency so as to determine the phase of a synthetic wavelength or a single wavelength. Also, Japanese Patent Laid-Open No. 2012-122850 discloses a measuring apparatus that measures the position of an object with high accuracy using a reference signal and a measured signal, both obtained from an interferometer.

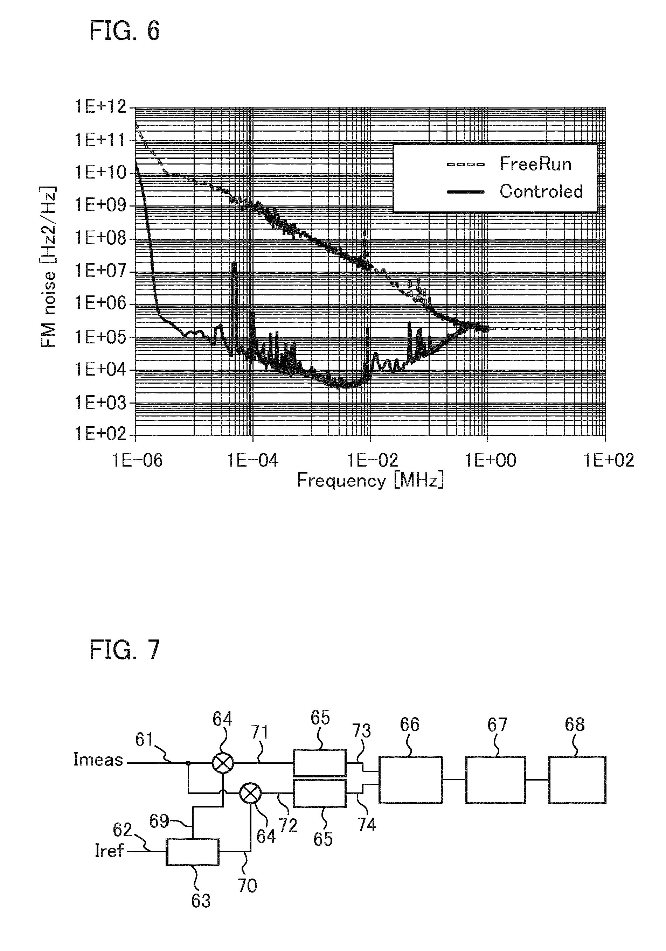

Here, in looking at the free run of the frequency noise for the light source in the conventional measuring apparatus exemplified in FIG. 6, the frequency noise gradually decreases with an increase in frequency in the low frequency band that is no greater than several tens of kHz, but becomes substantially constant in the high frequency band greater than several tens of kHz. Thus, it is preferable that a frequency noise in the low frequency band becomes small in order to stabilize the wavelength of the light source. However, if an attempt is made by the multi-wavelength heterodyne interferometer to superimpose a plurality of light fluxes so as to be detected by a single detector, these frequency noises are also shifted by a heterodyne frequency for each wavelength due to the frequency shift. Consequently, a white noise component is increased in the frequency noise to a signal at a frequency band near the heterodyne signal, resulting in an adverse effect on the measurement accuracy. For a heterodyne detection, it is usual that, upon detecting a phase difference between a reference signal and a measured signal, a heterodyne interferometer newly generates a standard signal based on the reference signal so as to determine a phase difference between the standard signal and the measured signal. Thus, the different calculation processing method for a reference signal and a measured signal also leads to a different phase noise transfer. Consequently, the error component which is commonly contained in both the reference signal and the measured signal cannot be canceled.

SUMMARY OF THE INVENTION

The present invention provides, for example, a measuring apparatus capable of performing highly-accurate measurement by reducing the effect of phase noise when using a multi-wavelength heterodyne interferometer.

The present invention in its first aspect provides a measuring apparatus as specified in claims 1 to 6. The present invention in its second aspect provides an article manufacturing method as specified in claim 7.

Further features of the present invention will become apparent from the following description of embodiments with reference to the attached drawings.

Each of the embodiments of the present invention described below can be implemented solely or as a combination of a plurality of the embodiments or features thereof where necessary or where the combination of elements or features from individual embodiments in a single embodiment is beneficial.

BRIEF DESCRIPTION OF THE DRAWINGS

FIG. 1 is a diagram illustrating a configuration of a measuring apparatus according to a first embodiment of the present invention.

FIG. 2A is a diagram illustrating a configuration of a calculator according to the first embodiment.

FIG. 2B is a diagram illustrating a configuration of a calculator according to the first embodiment.

FIG. 3 is a graph illustrating the characteristics of a notch filter in a calculator.

FIG. 4 is a diagram illustrating a configuration of a calculator in association with FIG. 2B.

FIG. 5 is a diagram illustrating a configuration of a measuring apparatus according to a second embodiment of the present invention.

FIG. 6 is a graph illustrating a frequency noise of a light source in a conventional measuring apparatus.

FIG. 7 is a diagram illustrating a configuration of a calculator in a conventional measuring apparatus.

FIG. 8 is a graph illustrating a transfer function of a conventional measuring apparatus.

DESCRIPTION OF THE EMBODIMENTS

Hereinafter, preferred embodiments of the present invention will be described with reference to the drawings.

(First Embodiment)

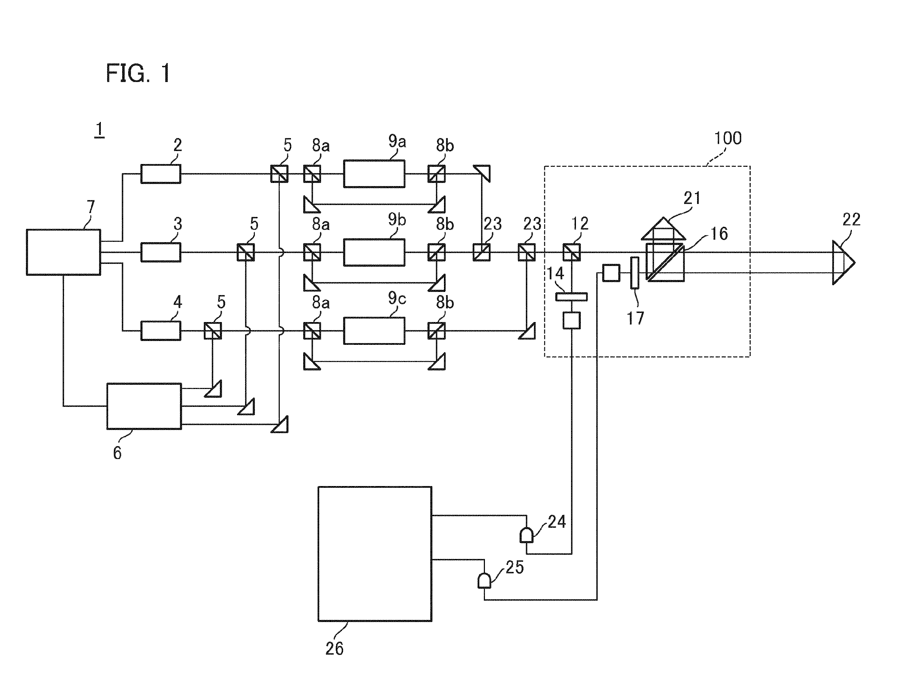

Firstly, a description will be given of a measuring apparatus according to a first embodiment of the present invention. FIG. 1 is a schematic diagram illustrating a configuration of a measuring apparatus 1 according to the present embodiment. The measuring apparatus 1 measures the position (the distance to a surface to be detected) of an object (object to be measured) 22 using a multi-wavelength heterodyne interferometer which uses light from a plurality of light sources whose wavelengths are different from each other (i.e. first light having a first wavelength, second light having a second wavelength different from the first wavelength, and so on). In the present embodiment, the number of light sources to be used, i.e., the number of wavelengths used, is three as an example. Firstly, the measuring apparatus 1 has a first light source 2, a second light source 3, and a third light source 4. The first light source 2 emits a laser beam (a light) having a first wavelength. The second light source 3 emits a laser beam (a light) having a second wavelength. The third light source 4 emits a laser beam (a light) having a third wavelength. Each of the light sources 2 to 4 may be, for example, a DFB (distributed-feedback) semiconductor laser. The light sources 2 to 4 are not necessarily limited to use of DFB lasers but may be other light sources, which are capable of performing interference measurement, having a narrow spectral line width. The light emitted from the light sources 2 to 4 is split by beam splitters 5, and one side of the split light fluxes is adjusted by a multiplexer such that the optical axes thereof are coaxial with one another so as to achieve wavelength stabilization, and this split light then enters a wavelength control unit 6.

Although not illustrated, the wavelength control unit 6 has a gas cell serving as a wavelength reference element, a spectroscope (spectroscopic element), and three detectors. The light sources 2 to 4 are controlled by a controller (laser control unit) 7 such that the wavelengths of the respective light sources are stabilized by using the absorption line of the gas enclosed within the gas cell. The light fluxes emitted from the light sources 2 to 4 are separated by the spectroscope, and are respectively detected by the detectors each corresponding to the laser beam of each wavelength. Firstly, the controller 7 executes control such that the wavelength of the light emitted from the first light source 2 is stabilized to a first wavelength $\lambda_1$, which is an absorption line of the gas cell using an output signal from the detector which detects the light emitted from the first light source 2. At this time, the controller 7 adjusts the wavelength of the light emitted from the first light source 2 such that transmission intensity of the detector which detects the light emitted from, for example, the first light source 2 becomes constant. As a wavelength adjusting method, for example, a method for modulating an injection current, or a method for controlling a temperature or the like is employed. Also, the controller 7 executes control such that the wavelength of the light emitted from the second light source 3 is stabilized to a second wavelength $\lambda_2$, which is an absorption line of the gas cell using an output signal from the detector which detects the light emitted from the second light source 3. Furthermore, the controller 7 executes control such that the wavelength of the light emitted from the third light source 4 is stabilized to a third wavelength $\lambda_3$, which is an absorption line of the gas cell using an output signal from the detector which detects the light emitted from the third light source 4. While, in the present embodiment, the wavelength accuracy is guaranteed by using the gas cell alone, an etalon (Fabry-Perot etalon) may also be used instead of the gas cell, or both the gas cell and the etalon may also be used. When the etalon is used, the wavelength of each fixed wavelength laser is stabilized to the wavelength of the transmission spectrum of the etalon.

The other of light fluxes split by the beam splitter 5 is split by a beam splitter 8a. One of the light fluxes split by the beam splitter 8a is subject to frequency modulation by a frequency shifter 9 and is then combined again with the other of the split light fluxes, split by the beam splitter 8a, by a multiplexer 8b. A first frequency shifter 9a, a second frequency shifter 9b, and a third frequency shifter 9c, which respectively correspond to the first light source 2, the second light source 3, and the third light source 4, impart frequency modulation to the light emitted from the first light source 2, the second light source 3, and the third light source 4, such that the frequency shift amounts thereof are respectively $f_1$,

$f_2$, and $f_3$, which are finely different from one another. Then, the respective light fluxes are adjusted by a multiplexer 23 such that the optical axes thereof are coaxial with one another, and then enter an interferometer 100 to be described below.

In particular, in the present embodiment, the interferometer 100 is a multi-wavelength heterodyne interferometer. The polarization direction of the light flux entering into the interferometer 100 is aligned with the transmitted polarization angle of a PBS (polarization beam splitter) 16. Firstly, the light flux enters a beam splitter 12, and the reflected light flux (interference light that occurs between light whose frequencies are different from each other) split by the beam splitter 12 is transmitted through an analyzer 14, and is then detected by a second detector 24. On the other hand, the light flux transmitted through the beam splitter 12 enters the PBS 16, and the polarized light fluxes having polarization directions orthogonal to each other are separated into transmitted light and reflected light. Among them, the transmitted light becomes light to be detected that is illuminated on a corner cube 22 as an object to be detected (object), whereas the reflected light becomes reference light that is illuminated on a corner cube 21 as a reference body. The light to be detected and the reference light, which have been returned from the corner cubes 21 and 22, respectively, are recombined into interference light by the PBS 16. The interference light is transmitted through an analyzer 17 and is then detected by a first detector 25. Heterodyne signals are detected by the first and second detectors 24 and 25 and are output as a reference signal 42 and a measured signal 41 to a calculator 26. As the first and second detectors 24 and 25, a multi pixel detector such as a CCD camera, a PD array, or the like may be employed. In this manner, the number of detectors can be reduced, which is advantageous in terms of costs.

The calculator (signal processing unit) 26 is constituted by, for example, an FPGA, an ASIC, a DSP, or the like, which can process a digital signal at high speed. FPGA is an abbreviation for Field-Programmable Gate Array, ASIC is an abbreviation for Application Specific Integrated Circuit, and DSP is an abbreviation for Digital Signal Processor. The calculation processing performed by the calculator 26 will be described below in detail.

Next, a description will be given of calculation of a length measurement value by the measuring apparatus 1. The calculator 26 executes calculation processing for calculating a length measurement value. Firstly, a description will be given of calculation processing performed by the conventional measuring apparatus in order to clarify the feature of calculation processing performed by the measuring apparatus 1. FIG. 7 is a block diagram illustrating calculation processing performed by a calculator 60 in the measuring apparatus disclosed in Japanese Patent Laid-Open No. 2012-122850 as a comparative example, where calculation processing of one wavelength only is extracted. Firstly, a measured signal ($I_{meas}$) 61 and a reference signal ($I_{ref}$) 62 are sampled by an A/D converter (not shown) at a sampling frequency $f_{sp}$, and are input as digital signals to the calculator 60. Among them, the reference signal 62 is input to a PLL (Phase Locked Loop) 63. The PLL 63 performs feedback control based on the input periodic signal and then outputs a Sin signal 69 and a Cos signal 70 which are phase-locked by another oscillator. The Sin signal 69 and the Cos signal 70 are mixed with a measured signal 61 by a mixer (synchronization detector) 64. The high frequency components of signals 71 and 72 generated by the mixing operation are largely attenuated by being selected to be in the vicinity of the poles of a notch filter 65 such as a CIC filter (Cascaded Integrator-Comb Filter) or the like. Note that the notch filter 65 is an exemplary decimation filter. The phases of signals 73 and 74 transmitted through the notch filter 65 are calculated by a CORDIC 66 serving as a phase calculator, where CORDIC is an abbreviation for Coordinate Rotation Digital Computer. The outputs are converted into a distance by a position calculator 67 and the distance is output through an LPF (Low Pass Filter) 68.

Here, since the error transfer function of the reference signal 62 is dominated by the transfer function of the PLL 63, the error transfer function of the reference signal 62 is represented by (Formula 1):

[Formula 1]

$$\left| H_{PLL}(s) \right| = \left| \frac{\beta_0 s + \beta_1}{\alpha_0 s^4 + \alpha_1 s^3 + \alpha_2 s^2} \right|$$

On the other hand, since the error transfer function of the measured signal 61 is dominated by the transfer function of the notch filter 65, the error transfer function of the measured signal 61 is represented by (Formula 2):

[Formula 2]

$$\left| H_{CIC}(f) \right| = \left| \left( \frac{\sin(\pi D f / f_{sp})}{\sin(\pi D f / f_{sp} / m)} \right)^N \right|$$

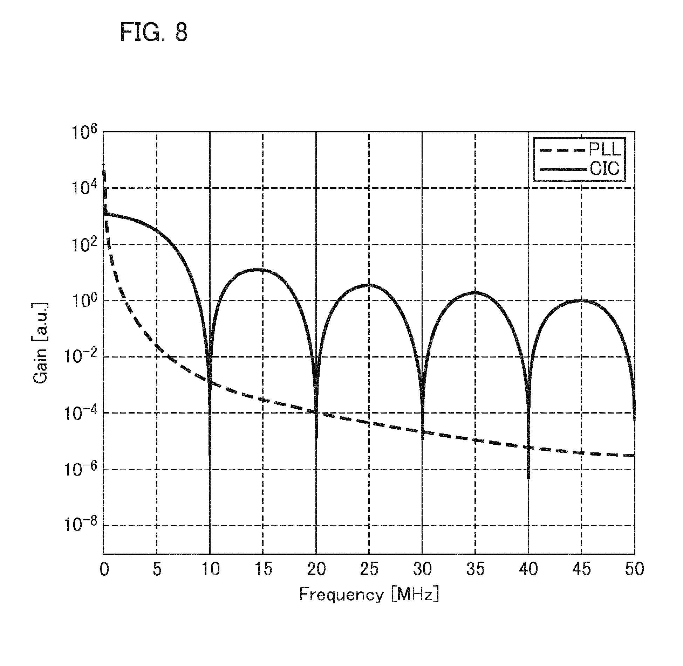

Where D represents a delay difference (1 or 2), m represents a decimation ratio (integer of two or greater), and N represents the number of stages of an integrator and a differentiator. Since the transfer function used in signal processing of the measured signal 61 is different from that of the reference signal 62 with reference to (Formula 1), (Formula 2), and a graph of gain versus frequency exemplified in FIG. 8 relating thereto, it can be seen that a difference between the measured signal 61 and the reference signal 62 causes an adverse effect on the measurement accuracy of the measuring apparatus. In particular, turning now to the effect of phase noise, the electric field $E_{ref}(t)$ of reference light and the electric field of $E_{test}(t)$ of light to be detected are represented by (Formula 3), and a measured signal (interference signal) is represented by (Formula 4):

[Formula 3]

$$E_{ref}(t) = \sqrt{I_1} \exp(2\pi f_0 t + \phi(t))$$

$$E_{test}(t) = \sqrt{I_2} \exp(2\pi (f_0 + df)t + \phi(t))$$

[Formula 4]

$$\left| E_{ref}(t) + E_{test}(t - \tau) \right|^2 = I_1 + I_2 + 2\sqrt{I_1 I_2} \cos(2\pi \cdot 2df \cdot t + \psi + \phi(t) - \phi(t - \tau))$$

$$\approx I_1 + I_2 + 2\sqrt{I_1 I_2} \cos(2\pi \cdot df \cdot t + \psi) + 2\sqrt{I_1 I_2} (\phi(t) - \phi(t - \tau)) \sin(2\pi \cdot df \cdot t + \psi)$$

In (Formula 4), the third term represents a measurement signal and the fourth term represents a difference between light source phase noises φ(t) included in light to be detected and reference light. The difference is frequency-shifted by df (frequency shift amount), and the resulting difference is superimposed on a measurement signal. Note that, since τ = 0 in the reference signal 62, the component of the fourth term does not actually occur. Consequently, when the phase noise of the light source is represented by an equation: φ(t) = a×cos(2nft), the following (Formula 5) is derived from the equation:

[Formula 5]

$$(\phi(t) - \phi(t - \tau)) = \sqrt{2 - 2\cos(2\pi f \tau)} a \cos(2\pi f t)$$

In other words, when calculation processing of the measured signal 61 is different from that of the reference signal 62, the transfer of phase noise of the measured signal 61 also differs from that of the reference signal 62. Thus, in the conventional measuring apparatus, the error component which is commonly contained in both the measured signal 61 and the reference signal 62 cannot be canceled. Thus, in the present embodiment, the calculator 26 executes the calculation processing as follows.

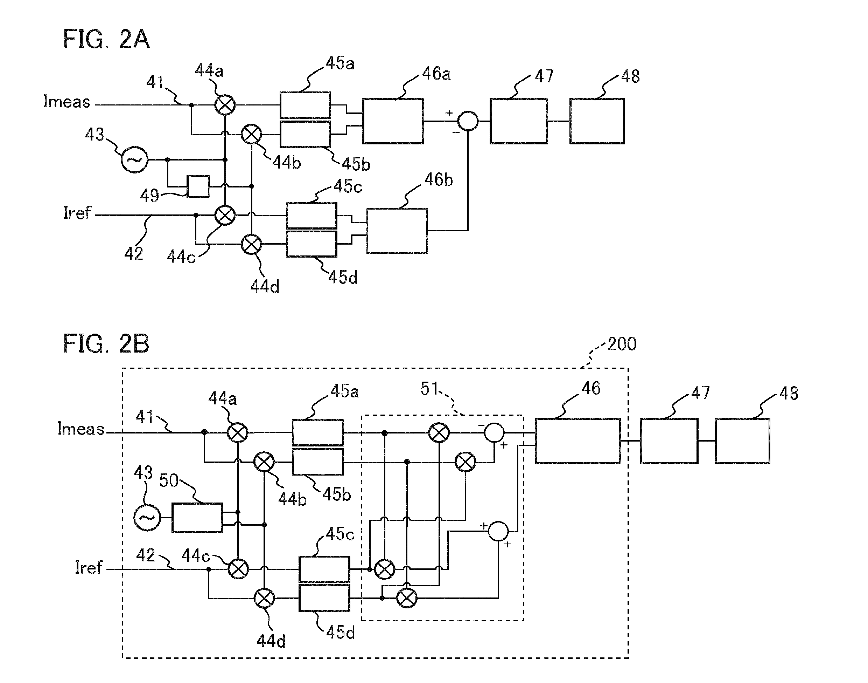

FIGs. 2A and 2B are block diagrams illustrating calculation processing performed by the calculator 26 according to the present embodiment, where calculation processing of one wavelength only (wavelength $\lambda_1$, heterodyne frequency $f_1$) is extracted as an example. Firstly, a description will be given of the content of the overall calculation processing performed by the calculator 26, with reference to a first example of the calculation processing performed by the calculator 26 shown in FIG. 2A. In particular, the calculator 26 in the present embodiment includes an oscillator 43 that generates a standard signal ($I_{stand}$: hereinafter denoted by the same reference numeral as that of the oscillator 43) having the same frequency as the heterodyne frequency $f_1$. Firstly, a measured signal ($I_{meas}$) 41 and a reference signal ($I_{ref}$) 42 are sampled by an A/D converter (not shown) at the sampling frequency $f_{sp}$, and are input as digital signals to the calculator 26. Next, the measured signal 41, the reference signal 42, a first standard signal of which the phase is maintained as it is from among a standard signal 43, and a second standard signal of which the phase has been changed by 90 degrees by a phase delay device 49, are accumulated and synchronous detection is performed by mixers 44a to 44d. Among the mixers 44a to 44d, the mixers 44a and 44b are a group (first synchronization detector) that perform synchronous detection of the measured signal 41 and the standard signal 43. In particular, the second standard signal is input to the mixer 44b. On the other hand, the mixers 44c and 44d are a group (second synchronization detector) that perform synchronous detection of the reference signal 42 and the standard signal 43. In particular, the second standard signal is input to the mixer 44d. At this time, the measured signal 41, the reference signal 42, and the standard signal 43 are represented by (Formula 6):

[Formula 6]

measured signal 41: $I_{meas} = A_{1meas} \cos(2\pi f_{1meas} t + \phi_1) + A_{2meas} \cos(2\pi f_{2meas} t + \phi_2) + A_{3meas} \cos(2\pi f_{3meas} t + \phi_3)$

reference signal 42: $I_{ref} = A_{1ref} \cos(2\pi f_1 t + \phi_{10}) + A_{2ref} \cos(2\pi f_2 t + \phi_{20}) + A_{3ref} \cos(2\pi f_3 t + \phi_{30})$

standard signal 43: $I_{stand} = A \cos(2\pi f_1 t)$

Where $f_{(n)meas}$ is the respective frequency of the measured signal 41, is affected by the Doppler effect due to the movement of an object, and changes depending on the moving speed thereof.

Next, a signal generated by mixing the measured signal 41 and the standard signal 43, and a signal generated by mixing the reference signal 42 and the standard signal 43 are represented by (Formula 7):

[Formula 7]

$$I_{meas} \times I_{stand} = \frac{A_{1meas} A}{2} (\cos(2\pi(f_{1meas} - f_1) + \phi_1) + \cos(2\pi(f_{1meas} + f_1)t + \phi_1)) \cdots$$

$$+ \frac{A_{2meas} A}{2} (\cos(2\pi(f_{2meas} - f_1)t + \phi_2) + \cos(2\pi(f_{2meas} + f_1)t + \phi_2)) \cdots$$

$$+ \frac{A_{3meas} A}{2} (\cos(2\pi(f_{3meas} - f_1)t + \phi_3) + \cos(2\pi(f_{3meas} + f_1)t + \phi_3))$$

$$I_{ref} \times I_{stand} = \frac{A_{1ref} A}{2} (\cos(\phi_{10}) + \cos(2\pi \times 2 f_1 t + \phi_{10})) \cdots$$

$$+ \frac{A_{2ref} A}{2} (\cos(2\pi(f_2 - f_1)t + \phi_{20}) + \cos(2\pi(f_2 + f_1)t + \phi_{20})) \cdots$$

$$+ \frac{A_{3ref} A}{2} (\cos(2\pi(f_3 - f_1)t + \phi_{30}) + \cos(2\pi(f_3 + f_1)t + \phi_{30}))$$

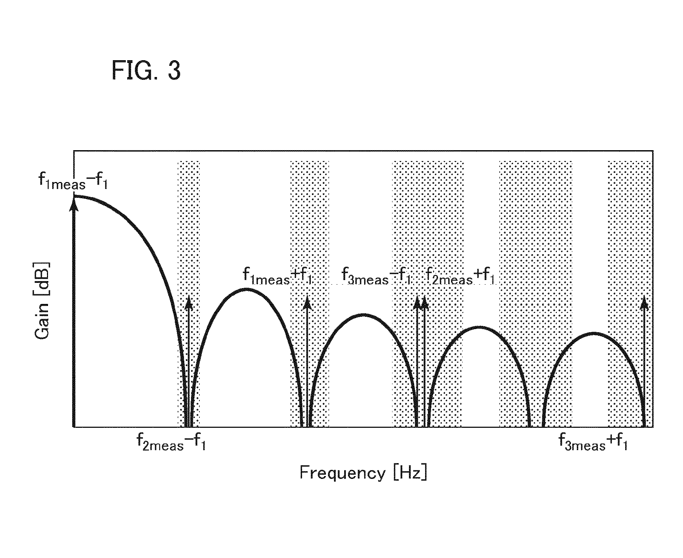

FIG. 3 is a graph illustrating gain versus signal frequency as a reference. The phase desired to be obtained from each signal shown in (Formula 7) is the low frequency component of the first term, or a fixed value obtained when stationary. The heterodyne frequency of each wavelength is determined such that the high frequency components other than the first term are filtered in the vicinity of the poles of the notch filter as shown in FIG. 3. Here, the heterodyne frequencies (frequency shift amounts applied to light from a plurality of light sources whose wavelengths are different from each other) with respect to the wavelengths $\lambda_1$, $\lambda_2$, ..., and $\lambda_n$ are respectively represented as $f_1$, $f_2$, ..., (fq: q is a positive integer less than n), and $f_n$. At this time, for determining heterodyne frequencies, it is preferable that a combination of frequencies is set to satisfy the conditions shown in the following (Formula 8) or (Formula 9), such that unwanted high frequency components generated upon demodulation by mixing the measured signal 41 and the standard signal 43, or by mixing the reference signal 42 and the standard signal 43, are in the vicinity of the poles of the notch filter.

[Formula 8]

$$f_{2meas} \pm f_1, f_{3meas} \pm f_1, \ldots, f_{(q)meas} \pm f_n \approx p \times f_m / 2$$

[Formula 9]

$$f_2 \pm f_1, \ldots, f_n \pm f_1, \ldots, f_q \pm f_n, 2 \times f_q = p \times f_m / 2$$

Where $f_m$ represents 1/m of the sampling frequency (decimation frequency) after decimation and p represents an integer. Note that a double wave component of each heterodyne frequency generated by the nonlinearity of a detection system, and a frequency folded by aliasing, are defined so as not to reach the vicinity of other heterodyne frequencies.

Here, when an attempt is made to drop all of the unwanted components to the poles in the graph shown in FIG. 3 as a conventional countermeasure, the number of poles needs to be increased to correspond to the number of unwanted components by increasing a decimation ratio. However, when the frequency band of the measured signal 41 is set to be larger than the Doppler frequency caused by movement of the object, there is a limitation for increasing the decimation ratio. Thus, the poles need to be removed from the graph upon frequency multiplexing. In the present embodiment, for the unwanted components deviated from the poles, harmonics contained in the phase difference determined by a first processing unit 47 in combination with a LPF 48, are removed so as to obtain the attenuation ratio required for achieving measurement accuracy. Here, a decimation frequency $f_m$ and a cutoff frequency $f_c$ of the LPF 48 satisfy the condition of $f_c < f_m/2$. The attenuation ratio of a frequency f (hereinafter referred to as "$f_N$") of an unwanted signal by a CIC filter (decimation filter) 45 is denoted by $G_{dec}(f_N)$. Furthermore, the signal is intended to be shifted to a frequency f'($f_N$' = mod($f_N$, $f_m/2$)) by the CIC filter 45, where mod(a, b) is the remainder obtained by dividing an integer a by b. Given that the attenuation ratio of the signal by the LPF 48 is denoted by $G_{LPF}(f_N')$, an unwanted signal to be finally output is attenuated by the amount of $G_{dec}(f_N) \times G_{LPF}(f_N')$. On the other hand, the magnification of a synthetic wavelength is denoted by k = $\Lambda_{23}/\lambda_3$ or $\Lambda_{12}/\lambda_{23}$ ($\lambda_3 < \Lambda_{23} < \Lambda_{12}$), and a phase difference between two wavelengths used for generating the synthetic wavelength is denoted by $\Delta\varphi$. At this time, the measurement accuracy required for connection of an interference order of a multi-wavelength interferometer needs to satisfy the condition of k $\times$ ($\Delta\varphi$) < n/2 as shown in (Formula 12), to be described below as the accuracy with which round-off calculation upon calculation of an interference order can be correctly executed. The phase measurement accuracy of each wavelength is n/(2 $\times$ ($2^{1/2}$) $\times$ k). Thus, the attenuation between the CIC filter 45 and the LPF 48 needs to satisfy the condition shown in (Formula 10). For example, when k = 10, the phase measurement accuracy becomes 17.6 m$\lambda$, and $G_{dec}(f_N) \times G_{LPF}(f_N')$ < - 9 . 5 dB.

[Formula 10]

$$G_{dec}(f) \times G_{LPF}(f') < \arctan\left(\frac{\pi}{2\sqrt{2} \times k}\right)$$

Taking these into consideration, a specific description will be given of the calculation processing (configuration) performed by the calculator 26 shown in FIGs. 2A and 2B. Hereinafter, the phase of the measured signal 41 is denoted by $\varphi_{(n)meas}$, the phase of the reference signal 42 is denoted by $\varphi_{(n)ref}$, and the phase of the standard signal 43 is zero for ease of explanation. Note that the subscript (n) of each phase represents the number of each wavelength. The phase of each of the signals includes a phase noise $\varphi_{noise}$ generated by frequency multiplexing. When the phase desired to be calculated is denoted by $\varphi'_{(n)meas}$, the phase of each of the signals is consequently represented by (Formula 11):

[Formula 11]

$$\phi_{(n)meas} = \phi'_{(n)meas} + \phi_{noise}$$

$$\phi_{(n)ref} = \phi'_{(n)ref} + \phi_{noise}$$

$$\phi_{noise} = \sqrt{\frac{\sum \phi_{(k)noise}}{N-1}}$$

Note that $\varphi_{(k)noise}$ is a phase noise exerted by another one wavelength, $\varphi_{noise}$ is the sum of these phase noises, and N represents the number of multiplexed signals. Here, the conventional calculator 60 described with reference to FIG. 7 will be discussed. FIG. 8 is a graph illustrating transfer functions for both a reference signal and a measured signal by the conventional calculator 60 as a reference. In this case, assume that the reference signal 62 is transmitted through the PLL 63 and the measured signal 61 is transmitted through the CIC filter 65, the transfer functions are different from each other, and the phase noise $\varphi_{noise}^{(PLL)}$ of the PLL 63 is not equalized to the phase noise $\varphi_{noise}^{(CIC)}$ of the CIC filter 65, and thus the residue remains as an error.

Firstly, the calculator 26 as the first example shown in FIG. 2A executes subtraction processing after the calculator 26 has independently determined the phases of the measured signal 41 and the reference signal 42. In this case, the phase $\varphi'_{(n)meas} + \varphi_{noise}^{(CIC)}$ is calculated from the measured signal 41 by performing an arctangent calculation of $\cos(\varphi_{(n)meas})$ and $\sin(\varphi_{(n)meas})$ output from the CIC filters 45a and 45b, respectively, by a CORDIC 46a. On the other hand, the phase $\varphi'_{(n)ref} + \varphi_{noise}^{(CIC)}$ is calculated from the reference signal 42 by performing an arctangent calculation of $\cos(\varphi_{(n)ref})$ and $\sin(\varphi_{(n)ref})$ output from the CIC filters 45c and 45d, respectively, by a CORDIC 46b. Then, when the output phase by the CORDIC 46b is subtracted from the output phase by the CORDIC 46a, a common error $\varphi_{noise}^{(CIC)}$ is removed, so that a desired phase $\varphi_{(n)} = (\varphi'_{(n)meas} - \varphi'_{(n)ref})$ can be calculated. In the example shown in FIG. 2A, the CORDIC 46a and the CORDIC 46b serve as the phase calculator (first processing means). The calculator 26 performs such calculation processing for each wavelength, and causes a position calculator (second processing means) 47 to calculate an absolute distance based on the results of phase calculation, and finally outputs data as a required band through the LPF 48.

On the other hand, the calculator 26 shown in FIG. 2B transmits the standard signal ($I_{stand}$) 43 obtained from the oscillator though a PLL 50 serving as a digital circuit to the mixers 44a to 44d. Also, the calculator 26 includes a third processing unit 51 provided within a processing circuit 200 which is constituted up to the CORDIC 46. Firstly, the third processing unit 51 calculates a $\cos(\varphi'_{(n)meas} - \varphi'_{(n)ref})$ signal by calculation of $(a \times c + b \times d)$ by using the outputs a, b, c, and d from the CIC filters 45a to 45d, respectively. Furthermore, the third processing unit 51 calculates a $\sin(\varphi'_{(n)meas} - \varphi'_{(n)ref})$ signal by calculation of $(a \times d - b \times c)$. Then, a phase is determined by arctangent calculation of these signals by the CORDIC 46. In this manner, while the number of the CORDICs 46 installed is two in the calculator 26 shown in FIG. 2A, the number of the CORDICs 46 installed is one in the calculator 26 shown in FIG. 2B. That is, the number of the CORDICs 46 installed is reduced by half, so that calculation resources can be reduced.

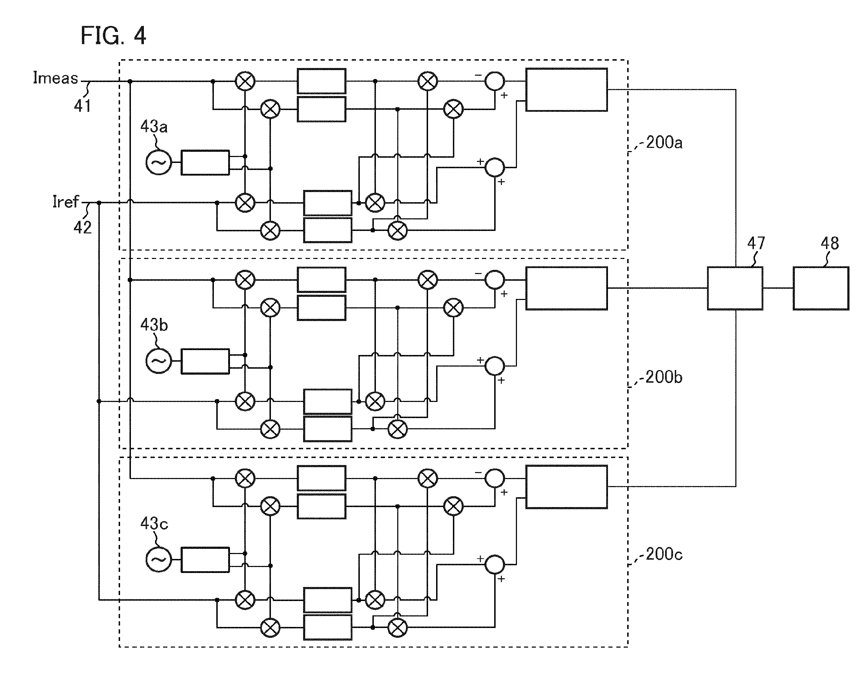

FIG. 4 is a block diagram illustrating calculation processing performed by the calculator 26 by taking an example of the case where a plurality of processing circuits 200, as shown in FIG. 2B, are provided, and the calculation processing is applied to a measurement signal obtained by superimposing interference signals having a plurality of wavelengths (here, three wavelengths). In this case, three processing circuits 200a, 200b, and 200c respectively include the oscillators 43a, 43b, and 43c having different frequencies corresponding to heterodyne frequencies having each wavelength, and the phase results $\varphi_1$, $\varphi_2$, and $\varphi_3$ output from the oscillators 43a, 43b, and 43c are converted into an absolute distance D by a position calculator 47, and the absolute distance D is output through the LPF 48.

As a method for calculating the absolute distance D using the phase results $\varphi_1$, $\varphi_2$, and $\varphi_3$, an interference order $N_3(t_1)$ at a wavelength $\lambda_3$ may be sequentially determined from the wavelength $\lambda_3$ and the interference orders $M_{12}(t_1)$ and $M_{23}(t_1)$ at two synthetic wavelengths $\Lambda_{12}$ and $\Lambda_{23}$, respectively, so as to calculate the absolute distance D. The interference orders $N_3(t_1)$, $M_{23}(t_1)$, and $M_{12}(t_1)$ are in a relationship of $\lambda_3 \ll \Lambda_{23} \ll \Lambda_{12}$ and are represented by (Formula 12):

[Formula 12]

$$\begin{cases} N_3(t_1) = round\left(\left(M_{23}(t_1) + \dfrac{\phi_3(t_1) - \phi_2(t_1)}{2\pi}\right)\dfrac{n(\lambda_3)\Lambda_{23}}{n_g(\lambda_2,\lambda_3)\lambda_3} - \dfrac{\phi_3(t_1)}{2\pi}\right) \\[2mm] M_{23}(t_1) = round\left(\left(M_{12}(t_1) + \dfrac{\phi_2(t_1) - \phi_1(t_1)}{2\pi}\right)\dfrac{n_g(\lambda_2,\lambda_3)\Lambda_{12}}{n_g(\lambda_1,\lambda_2)\Lambda_{23}} - \dfrac{\phi_3(t_1) - \phi_2(t_1)}{2\pi}\right) \\[2mm] M_{12}(t_1) = round\left(\left(\dfrac{\phi_2(t_1) - \phi_1(t_1)}{2\pi}\right)\dfrac{n_g(\lambda_1,\lambda_2)}{\Lambda_{12}} - \dfrac{\phi_1(t_1) - \phi_2(t_1)}{2\pi}\right) \end{cases}$$

Where, $\Lambda_{pq}$ is a synthetic wavelength that is generated by $\lambda_p$ and $\lambda_q$ and is represented by $|\lambda_p\lambda_q/(\lambda_p+\lambda_q)|$, $n_g(\lambda_p, \lambda_q)$ is a group refractive index of $\lambda_p$ and $\lambda_q$, and $n(\lambda_p)$ is a refractive index at $\lambda_p$. The absolute distance D is represented by (Formula 13) using the interference order $N_3(t_1)$ at the obtained wavelength $\lambda_3$:

[Formula 13]

$$D(t_1) = \frac{\lambda_3}{2n(\lambda_3)}\left(N_3(t_1) + \frac{\phi_3(t_1)}{2\pi}\right)$$

As described above, although the different calculation processing for a measured signal and a reference signal may lead to a different phase noise transfer in the conventional measuring apparatus, the measuring apparatus 1 matches the transfer of phase noise by using the standard signal 43 having a frequency equivalent to a heterodyne frequency. In this manner, the measuring apparatus 1 can cancel the error component which is commonly contained in both the measured signal 41 and the reference signal 42, resulting in a reduction of the adverse effect on measurement accuracy.

As described above, according to the present embodiment, a measuring apparatus that is capable of performing highly-accurate measurement by reducing the effect of phase noise may be provided when using a multi-wavelength heterodyne interferometer.

(Second Embodiment)

Next, a description will be given of a measuring apparatus according to a second embodiment of the present invention. In the first embodiment, a description has been given by taking an example of a measuring apparatus that measures the distance to a surface to be detected of an object 22, using a multi-wavelength heterodyne interferometer using light having three different wavelengths. In contrast, a feature of the measuring apparatus of the present embodiment lies in the fact that the measuring apparatus measures the shape of a surface to be detected on an object, using a multi-wavelength heterodyne interferometer using light having a plurality (e.g., two) of different wavelengths, by applying the aforementioned calculation processing performed by the measuring apparatus 1 of the first embodiment.

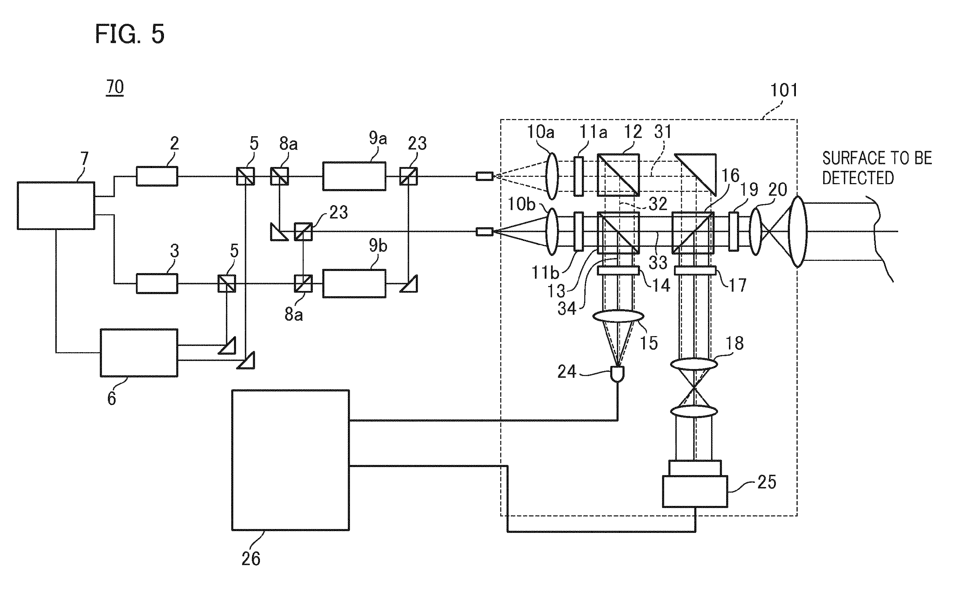

FIG. 5 is a schematic diagram illustrating a configuration of a measuring apparatus 70 according to the present embodiment. In the measuring apparatus 70 shown in FIG. 5, the same elements as those provided in the measuring apparatus 1 in the first embodiment are designated by the same reference numerals, and explanation thereof will be omitted. Also, in the present embodiment, the interferometer 101 is a multi-wavelength heterodyne interferometer. From among the light fluxes entering the interferometer 101, the light flux entering a collimator lens 10a is a light flux obtained by combining light obtained by frequency shifting light emitted from the first light source 2 by the first frequency shifter 9a, and light obtained by frequency shifting light emitted from the second light source 3 by the second frequency shifter 9b. On the other hand, the light flux entering a collimator lens 10b is a light flux obtained by combining light emitted from the first light source 2, light emitted from the second light source 3, and light which has no frequency shift. The frequency-shifted combined light flux is collimated into a collimated light flux by the collimator lens 10a, and the polarization direction of the collimated light flux is adjusted by a polarization adjusting element 11a, such as a 1/2 wavelength plate, so as to match the transmitted polarization angle of the PBS 16. The light flux of which the polarization direction has been adjusted is split into a reflected light flux 32, and a transmitted light flux 31 by the beam splitter 12. On the other hand, the combined light flux which has no frequency shift is collimated into a collimated light flux by the collimator lens 10b, and the polarization direction of the collimated light flux is adjusted by a polarization adjusting element 11b so as to match the transmitted polarization angle of the PBS 16. The light flux of which the polarization direction has been adjusted is split into a reflected light flux 34 and a transmitted light flux 33 by a beam splitter 13. The transmitted light flux 33 which has no frequency shift is transmitted through the PBS 16, is polarized into a circular polarization by a 1/4 wavelength plate 19, is collimated into a collimated light flux by an object lens 20, and is then illuminated onto the surface to be detected of an object. The light flux reflected from the surface to be detected is transmitted through the 1/4 wavelength plate 19 again, is polarized into a linear polarization in which the polarization plane is rotated by 90 degrees from the original polarization plane upon incidence on the 1/4 wavelength plate 19, is reflected by the PBS 16, and is combined with the frequency-shifted transmitted light flux 31. At this time, an interference signal of a light emitted from the PBS 16 is cut out by a polarizer 17.

Then, the detector 25 detects a beat signal corresponding to a difference between frequencies of the light flux, and the beat signal is output as the measured signal 41 to the calculator 26. On the other hand, the frequency-shifted reflected light flux 32 split by the beam splitter 12 and the reflected light flux 34, which has no frequency shift, split by the beam splitter 13, are combined by the beam splitter 13. Then, the detector 24 detects a beat signal corresponding to the frequency shift amount of both light fluxes, and the beat signal is output as the reference signal 42 to the calculator 26. The calculator 26 executes the same calculation processing as that in the first embodiment using the obtained measured signal 41 and reference signal 42. In this manner, the same effect as that in the first embodiment may be provided by the measuring apparatus 70 of the present embodiment. Note that the shape of the surface to be detected can be determined by measuring a plurality of positions (distances) on the surface to be detected.

(Article Manufacturing Method)

The article manufacturing method of the present embodiment is used for processing articles such as metal components such as gears, optical elements, and the like. The article processing method of the present embodiment includes a step of measuring the shape of the surface to be detected of the article using the aforementioned measuring apparatus (measuring method), and a step of processing the surface to be detected based on the measurement results obtained by the measuring step. For example, the shape of the surface to be detected is measured by the measuring apparatus, and then, the surface to be detected is processed based on the measurement results such that the surface to be detected is formed into a desired shape following a design value. Since the shape of the surface to be detected can be measured by the measuring apparatus with high accuracy, the article manufacturing method of the present embodiment is advantageous in terms of at least processing accuracy of articles as compared with the conventional method.

While the present invention has been described with reference to embodiments, it is to be understood that the invention is not limited to the disclosed embodiments.

For example, the aforementioned calculation processing is applicable to a measuring apparatus which is capable of performing absolute length measurement by scanning one wavelength out of a plurality of wavelengths.

**Claims**

1.  A measuring apparatus (1) for measuring a position of an object, the measuring apparatus comprising:

    a heterodyne interferometer (100) configured to generate reference light and light to be detected, each light having different frequencies from each other, using first light having a first wavelength and second light having a second wavelength different from the first wavelength, and configured to cause the light to be detected, after reflection from the object, to interfere with the reference light;
    a first detector (25) configured to detect interference light between the reference light and the light to be detected, and output a measured signal (41);
    a second detector (24) configured to detect interference light between the first light and the second light , and output a reference signal (42);
    an oscillator (43; 43a - 43c) configured to generate a standard signal having a frequency corresponding to a frequency shift amount;
    a first synchronization detector (44a, 44b) configured to perform synchronous detection of the measured signal (41) output from the first detector (25) and the standard signal generated by the oscillator (43; 43a - 43c);
    a second synchronization detector (44c, 44d) configured to perform synchronous detection of the reference signal (42) output from the second detector (24) and the standard signal generated by the oscillator (43; 43a - 43c);
    a first processing means (46; 46a, 46b) configured to determine a phase difference between the measured signal (41) and the reference signal (42) based on the outputs of the first synchronization detector (44a, 44b) and the second synchronization detector (44c, 44d); and
    a second processing means (47) configured to determine the position of the object based on the phase difference determined by the first processing means (46; 46a, 4 6b) .

2.  The measuring apparatus according to claim 1, further comprising:

    a converter configured to A/D convert the measured signal (41) and the reference signal (42) prior to input to the first synchronization detector (44a, 44b) and the second synchronization detector (44c, 44d), respectively, using a sampling frequency; and
    a decimation filter (45a - 45d) configured to decimate the output of each of the first synchronization detector (44a, 44b) and the second synchronization detector (44c, 44d) to 1/m of the sampling frequency with respect to the sampling frequency, where m is an integer of two or greater,
    wherein, given that m represents a decimation ratio of the decimation filter, $f_m$ represents a decimation frequency which is 1/m of a sampling frequency, p represents an integer, and q represents an integer less than n, the decimation ratio and the frequency shift amounts $f_1$, $f_2$, ..., $f_n$ of the first light and the second light satisfy at least one of the following conditions:

[Formula 1]

$$f_2 \pm f_1, \ldots, f_n \pm f_1, \ldots, f_q \pm f_n, 2 \times f_q = p \times f_m / 2$$

, and
wherein the first processing means (46; 46a, 46b) calculates the phase difference based on respective outputs from the decimation filter (45a - 45d).

3. The measuring apparatus according to claim 2, further comprising:

a low-pass filter (48) configured to remove harmonics included in the phase difference determined by the first processing means (46; 46a, 46b),
wherein, given that $f_c$ represents a cutoff frequency, the decimation frequency and the cutoff frequency of the low-pass filter (48) satisfy the condition of $f_c < f_m/2$.

4. The measuring apparatus according to claim 3, wherein $G_{dec}(f)$ which is an attenuation ratio of a frequency (f = $f_2 \pm f_1$, ..., $f_n \pm f_1$, ..., $f_q \pm f_n$) of an unwanted signal in the decimation filter, $G_{LPF}(f')$ which is an attenuation ratio of a frequency (frequency f' = mod(f, $f_m/2$)) shifted by the decimation filter in the low-pass filter, and k (>1) which is a magnification of a synthetic wavelength, satisfy the following condition:

[Formula 2]

$$G_{dec}(f) \times G_{LPF}(f') < \arctan\left(\frac{\pi}{2\sqrt{2} \times k}\right)$$

5. The measuring apparatus according to any one of claims 1 to 4, further comprising:

a phase delay device (49) configured to change a phase of the standard signal generated from the oscillator (43; 43a - 43c) by 90 degrees,
wherein the oscillator (43; 43a - 43c) outputs a first standard signal, in which the phase is not changed, and a second standard signal, in which the phase is changed by 90 degrees from the standard signal via the phase delay device (49), to the first synchronization detector (44a, 44b) and the second synchronization detector (44c, 44d), respectively.

6. The measuring apparatus according to any one of claims 1 to 4, further comprising:

a phase-locked loop (50) configured to output the standard signal generated by the oscillator (43; 43a-43c) as phase-locked Sin and Cos signals to the first synchronization detector (44a, 44b) and the second synchronization detector (44c, 44d).

7. A method of manufacturing an article, the method comprising:

measuring the shape of a surface to be detected of an article using a measuring apparatus (1), the measuring apparatus comprising:

a heterodyne interferometer (100) configured to generate reference light and light to be detected, each light having different frequencies from each other, using first light having a first wavelength and second light having a second wavelength different from the first wavelength, and configured to cause the light to be detected, after reflection from the surface to be detected, to interfere with the reference light;
a first detector (25) configured to detect interference light between the reference light and the light to be detected, and output a measured signal (41);

a second detector (24) configured to detect interference light between the first light and the second light, and output a reference signal (42);

an oscillator (43; 43a - 43c) configured to generate a standard signal having a frequency corresponding to a frequency shift amount;

a first synchronization detector (44a, 44b) configured to perform synchronous detection of the measured signal (41) output from the first detector (25) and the standard signal generated by the oscillator (43; 43a - 43c);

a second synchronization detector (44c, 44d) configured to perform synchronous detection of the reference signal (42) output from the second detector (24) and the standard signal generated by the oscillator (43; 43a - 43c);

a first processing means (46; 46a, 46b) configured to determine a phase difference between the measured signal (41) and the reference signal (42) based on the outputs of the first synchronization detector (44a, 44b) and the second synchronization detector (44c, 44d); and

a second processing means (47) configured to determine the shape of the surface to be detected based on the phase difference determined by the first processing means (46; 46a, 46b); and

processing the surface to be detected based on the measured shape.

FIG. 1

FIG. 2A

FIG. 2B

FIG. 3

FIG. 4

FIG. 5

FIG. 6

FIG. 7

FIG. 8

Europäisches
Patentamt

European
Patent Office

Office européen
des brevets

# EUROPEAN SEARCH REPORT

**Application Number**

EP 14 16 4284

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOKOYAMA S ET AL: "REAL-TIME AND HIGH-RESOLUTION ABSORLUTE-DISTANCE MEASUREMENT USING A TWO-WAVELENGTH SUPERHETERODYNE INTERFEROMETER", MEASUREMENT SCIENCE AND TECHNOLOGY, IOP, BRISTOL, GB, vol. 10, no. 12, 1 December 1999 (1999-12-01), pages 1233-1239, XP000935541, ISSN: 0957-0233, DOI: 10.1088/0957-0233/10/12/315 | 1,7 | INV. G01B9/02 |
| Y | * the whole document * ----- | 2-4 | |
| X | MIN-SEOK KIM ET AL: "Two-way frequency-conversion phase measurement for high-speed and high-resolution heterodyne interferometry; Two-way frequency-conversion phase measurement for high-speed and high-resolution heterodyne interferometry", MEASUREMENT SCIENCE AND TECHNOLOGY, IOP, BRISTOL, GB, vol. 15, no. 11, 1 November 2004 (2004-11-01), pages 2341-2348, XP020066421, ISSN: 0957-0233, DOI: 10.1088/0957-0233/15/11/021 | 1,7 | |
| | | | **TECHNICAL FIELDS SEARCHED (IPC)** |
| | | | G01B |
| Y | * the whole document * ----- | 2-6 | |
| Y,D | US 2012/147382 A1 (OKADA YOSHIYUKI [JP]) 14 June 2012 (2012-06-14) * abstract; figures 1-3 * * paragraph [0029] - paragraph [0086] * ----- | 2-6 | |

The present search report has been drawn up for all claims

| Place of search | Date of completion of the search | Examiner |
|---|---|---|
| Munich | 26 June 2014 | Stanciu, C |

EPO FORM 1503 03.82 (P04C01)

**ANNEX TO THE EUROPEAN SEARCH REPORT
ON EUROPEAN PATENT APPLICATION NO.**

EP 14 16 4284

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2014

| Patent document cited in search report | Publication date | Patent family member(s) | Publication date |
|---|---|---|---|
| US 2012147382 A1 | 14-06-2012 | JP 2012122850 A<br>US 2012147382 A1 | 28-06-2012<br>14-06-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011099756 A
- JP H11201727 B
- JP 2012122850 A